# EUROPEAN PATENT APPLICATION

(11) **EP 3 736 808 A1**
(43) Date of publication of application: **11.11.2020**
(21) Application number: 20171959.8
(22) Date of filing: 29.04.2020
(51) Int. Cl.: G10L 15/26, G01C 21/36, G08G 1/01

(54) **INFORMATION COLLECTION SYSTEM**

(30) Priority: 09.05.2019 JP 2019088994
(71) Applicant: YAZAKI CORPORATION, Minato-ku, Tokyo 108-8333 (JP)
(72) Inventor: SAKAMOTO, Nana, Susono-shi, Shizuoka (JP)
(74) Representative: Grünecker Patent- und Rechtsanwälte PartG mbB

(57) **Abstract**

An information collection system is configured to collect information from information providers. The information collection system includes a first communication terminal to be owned by one of the information providers, and a server configured to perform communication with the first communication terminal. The first communication terminal includes an input interface to which speech information is input and a first transmitter configured to transmit the speech information input through the input surface. The server includes a converter configured to execute a speech recognition to convert the speech information transmitted from the first transmitter into text information, and a storage device configured to store the text information.

## Description

### TECHNICAL FIELD

The present invention relates to an information collection system configured to collect information from information providers.

### BACKGROUND

Various kinds of information are provided through social networking services (SNSs) such as Twitter (registered trademark), Facebook (registered trademark), Instagram (registered trademark) and the like. However, from the viewpoint of information users, there may not always be a sufficient number of information providers providing useful information. For example, when searching for highway traffic congestion information using an SNS, there may only be a small number of information providers providing useful information.

### SUMMARY

Illustrative aspects of the present invention provide an information collection system capable collecting useful information from information providers.

According to an aspect of the present invention, an information collection system is configured to collect information from an information provider. The information collection system includes a first communication terminal to be owned by the information provider, and a server configured to perform communication with the first communication terminal. The first communication terminal includes an input interface to which speech information is input and a first transmitter configured to transmit the speech information input through the input surface. The server includes a converter configured to execute a speech recognition to convert the speech information transmitted from the first transmitter into text information, and a storage device configured to store the text information.

Other aspects and advantages of the invention will be apparent from the following description, the drawings and the claims.

### BRIEF DESCRIPTION OF DRAWINGS

Fig. 1 is a diagram illustrating an information collection system according to an embodiment of the present invention;
Fig. 2 is a diagram illustrating an electric configuration of a communication terminal illustrated in Fig. 1;
Fig. 3 is a diagram illustrating an electric configuration of a server illustrated in Fig. 1;
Fig. 4 is an explanatory diagram illustrating an example of a method of using the information collection system;
Fig. 5 is an explanatory diagram illustrating an example of a method of using the information collection system;
Fig. 6 is an explanatory diagram illustrating an example of a request screen displayed on a display of the communication terminal;
Fig. 7 is a flowchart illustrating steps for a talk request processing to be performed by the communication terminal and the server; and
Fig. 8 is a flowchart illustrating steps for an image request processing to be performed by the communication terminal and the server.

### DETAILED DESCRIPTION

Hereinafter, embodiments of the present invention will be described with reference to the drawings.

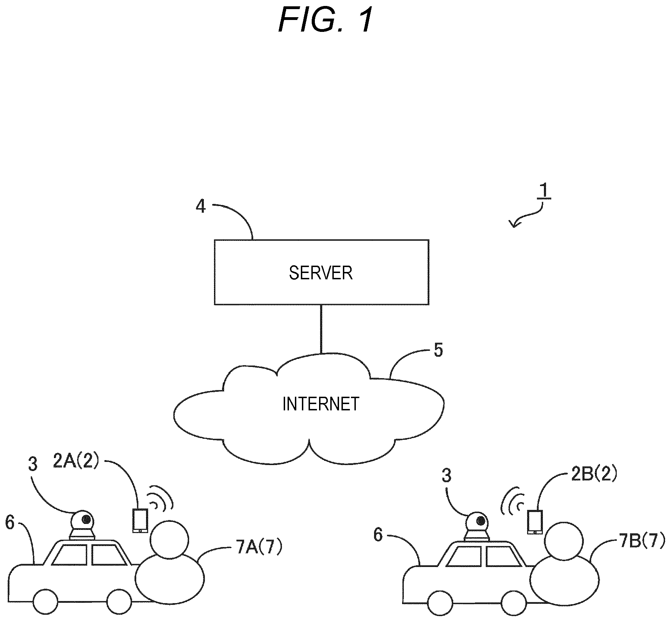

Fig. 1 is a block diagram illustrating an information collection system 1 according to an embodiment of the present invention. The information collection system 1 is configured to allow registered users 7 to share information via communication terminals 2 such as smartphones on which an information collection application is downloaded and through which the users 7 make user registrations.

As illustrated in Fig. 1, the information collection system 1 includes the communication terminals 2 owned by the registered users 7 who have registered in the information collection application, onboard cameras 3 mounted on the vehicles 6 owned by the registered users 7, and a server 4 that collects information from the registered users 7 (information providers 7A) who are the information providers 7A through communication with the communication terminals 2 and provides the collected information to other registered users 7 (information providers 7B) who are the information users 7B. In the embodiment, the communication terminals 2 and the server 4 are configured to be able to communication with each other through an Internet network 5.

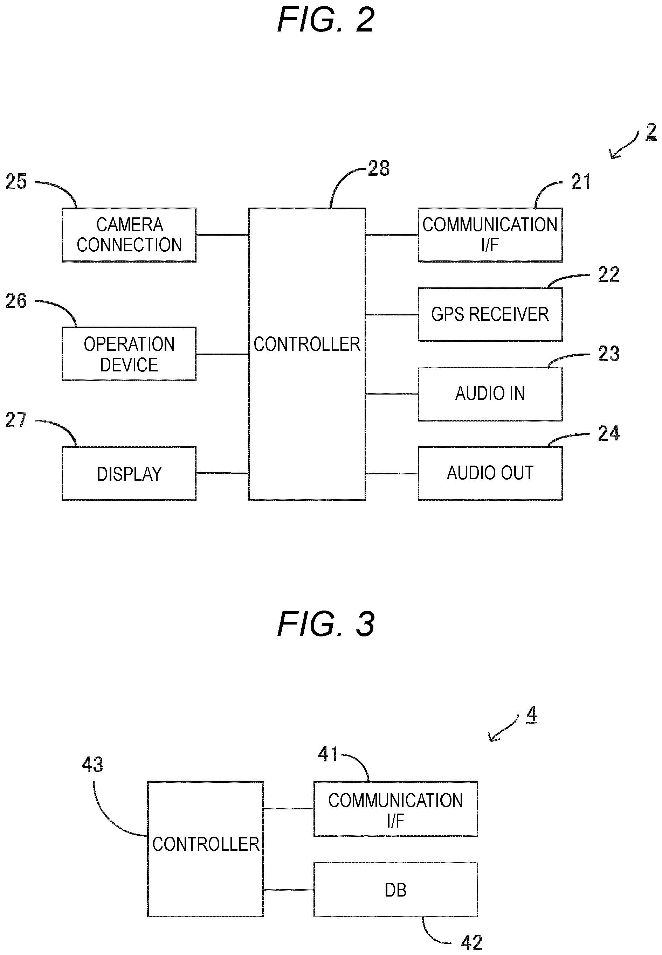

The communication terminal 2 is configured as, for example, a smartphone or a tablet. As illustrated in Fig. 2, the communication terminal 2 includes a communication interface 21, a GPS receiver 22, an audio input device 23 (an input interface), an audio output device 24, a camera connection 25, an operation device 26, a display 27, and a controller 28.

The communication interface 21 includes a circuit, an antenna, and the like for wireless connection with the Internet network 5. The GPS receiver 22 receives radio waves sent from a plurality of global positioning system (GPS) satellites, as known, obtains a current position, and outputs the current position to the controller 28 to be described below. Speech information is input to the audio input device 23 including, for example, a microphone. The speech information input to the audio input device 23 includes, for example, request information indicating a content of information the information user 7B desires to acquire and communication between the information provider 7A and the information user 7B.

The audio output device 24 includes a speaker and outputs speech information. The camera connection 25 is connected to the onboard camera 3 and image information captured by the onboard camera 3 is input. In the embodiment, an example in which the communication terminal 2 and the onboard camera 3 are connected in a wired manner will be described, but the invention is not limited thereto. The communication terminal 2 and the onboard camera 3 may be connected in a wireless manner.

The operation device 26 is operable to input information to provide or to request information. The display 27 displays information transmitted from the server 4. In this embodiment, the operation device 26 and the display 27 are integrally provided as a touch panel.

The controller 28 includes, for example, a central processing unit (CPU) having a memory such as a random access memory (RAM) or a read-only memory (ROM), and is configured to control the entire communication terminal 2. The controller 28 functions as a first transmitter, and is configured to attach a time stamp, positional information, an identification information (ID) of the registered user 7, an ID of a vehicle, or the like to the image information from the onboard camera 3 or the speech information input from the audio input device 23 to transmit the image information or the speech information to the server 4.

Hereinafter, the communication terminal 2 owned by the information provider 7A is referred to as a first communication terminal 2A and the communication terminal 2 owned by the information user 7B is referred to as a second communication terminal 2B in description. In the embodiment, any registered user 7 can become the information provider 7A or the information user 7B.

For example, the onboard camera 3 is mounted on the roof of the vehicle 6, and is configured to capture a 360-degree moving image in all of the up, down, right, and left directions.

As illustrated in Fig. 3, the server 4 includes a communication interface 41, a database (hereinafter referred to as a DB) 42, and a controller 43. The communication interface 41 includes a circuit connected to the Internet network 5. The DB 42 stores registered information (an address, an ID, or the like) of the registered user 7 and registered information (a vehicle model, an ID, or the like) of the vehicle 6 in which the onboard camera 3 is mounted. The DB 42 (storage device) stores image information, speech information, or the like transmitted from the first communication terminal 2A.

The controller 43 includes, for example, a CPU that includes a memory such as a RAM or a ROM and controls the entire server 4. The server 4 stores the image information transmitted from the first communication terminal 2A in the DB 42. The server 4 performs speech recognition processing on a part or all of the speech information transmitted from the first communication terminal 2A to convert the speech information into text information and stores the text information in the DB 42.

The server 4 enables the information user 7B to talk with the information provider 7A in response to a talk request from the information user 7B. The server 4 transmits information transmitted to the DB 42 to the information user 7B in response to a request from the information user 7B.

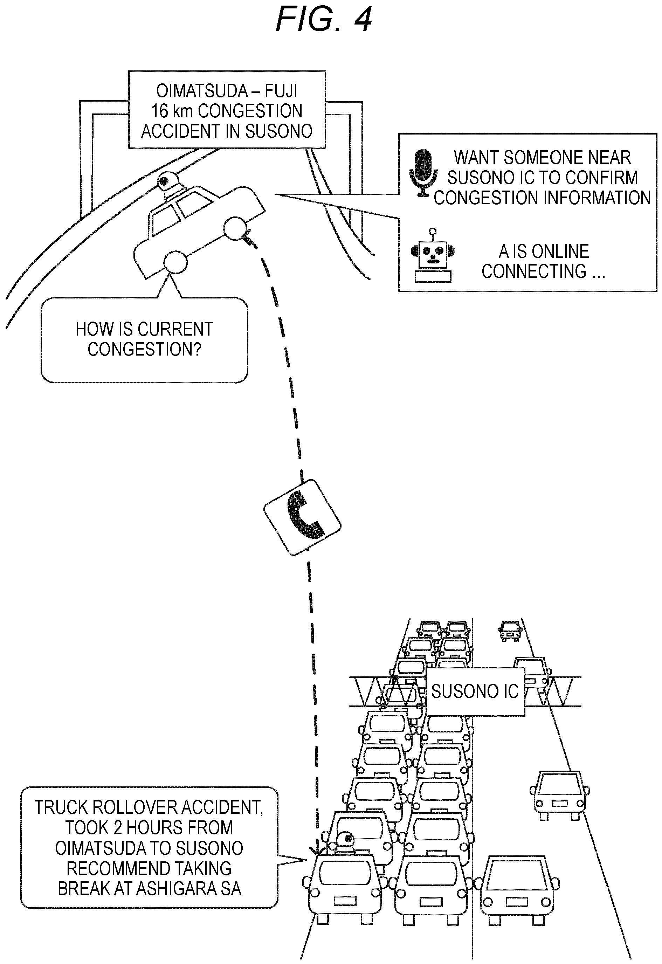

Next, the details of an operation of the information collection system 1 described schematically above will be described below with reference to Figs. 4 to 7. First, the information provider 7A operates the operation device 26 of the first communication terminal 2A to activate an information collection application and to permit talks. In response to this operation, the controller 28 of the first communication terminal 2A attaches an ID of the information provider 7A to talk permitting information and transmits the talk permitting information to the server 4. The first communication terminal 2A periodically transmits positional information from the GPS receiver 22 to the server 4. Thus, the server 4 can store the information provider 7A permitting the talks and a position of the information provider 7A in the DB 42.

When the information provider 7A connects a communication line drawn from the onboard camera 3 to the camera connection 25 and performs an operation of permitting provision of an image, the first communication terminal 2A attaches positional information to image information (a moving image) from the onboard camera 3 and transmits the image information to the server 4. When the image information (the moving image) is received from the first communication terminal 2A, the server 4 stores the image information in the DB 42.

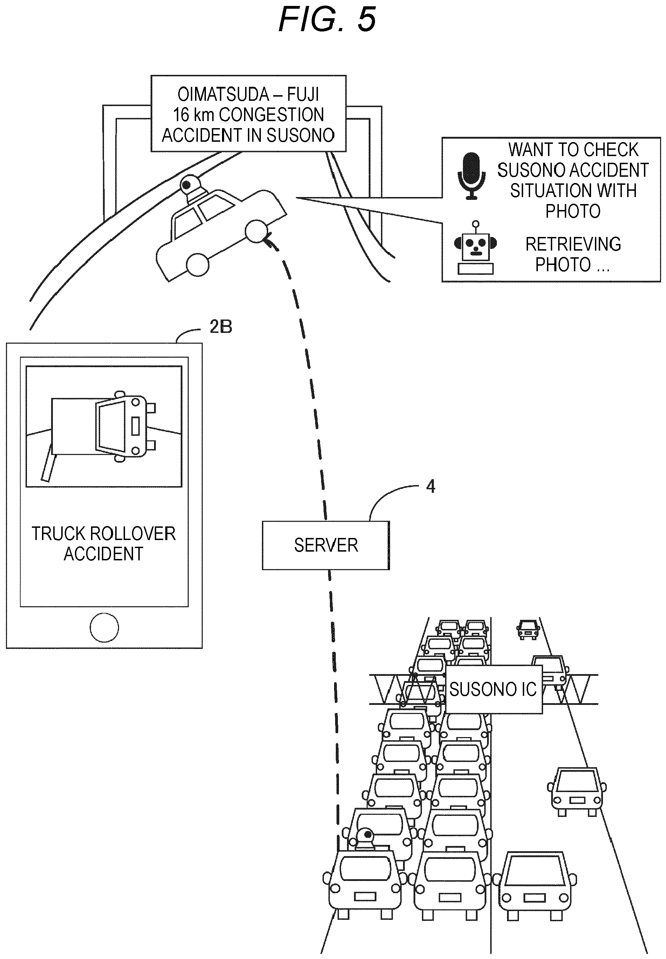

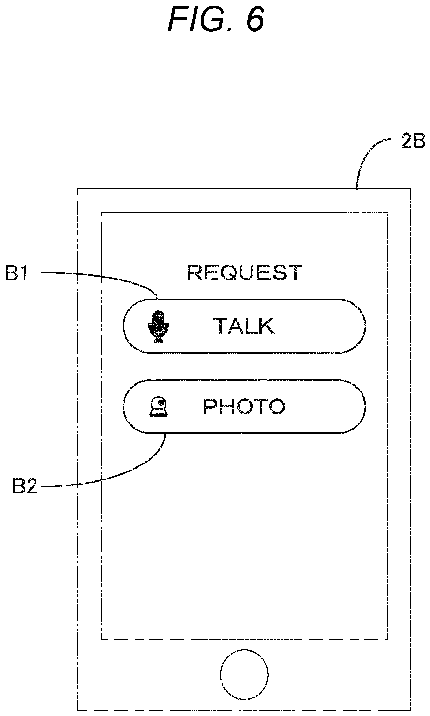

Here, for example, as illustrated in Figs. 4 and 5, the information user 7B is assumed to see information an electric bulletin board set on a highway, such as "Oimatsuda-Fuji, 16 km congestion, accident in Susono" and desire to know detailed information. The information user 7B operates the operation device 26 of the second communication terminal 2B to activate the information collection application and displays a request screen illustrated in Fig. 6.

The second communication terminal 2B displays a TALK button B1 and a PHOTO button B2 on the request screen. The TALK button B1 is for talking with the information provider 7A. The PHOTO button B2 is for displaying image information collected from the information provider 7A.

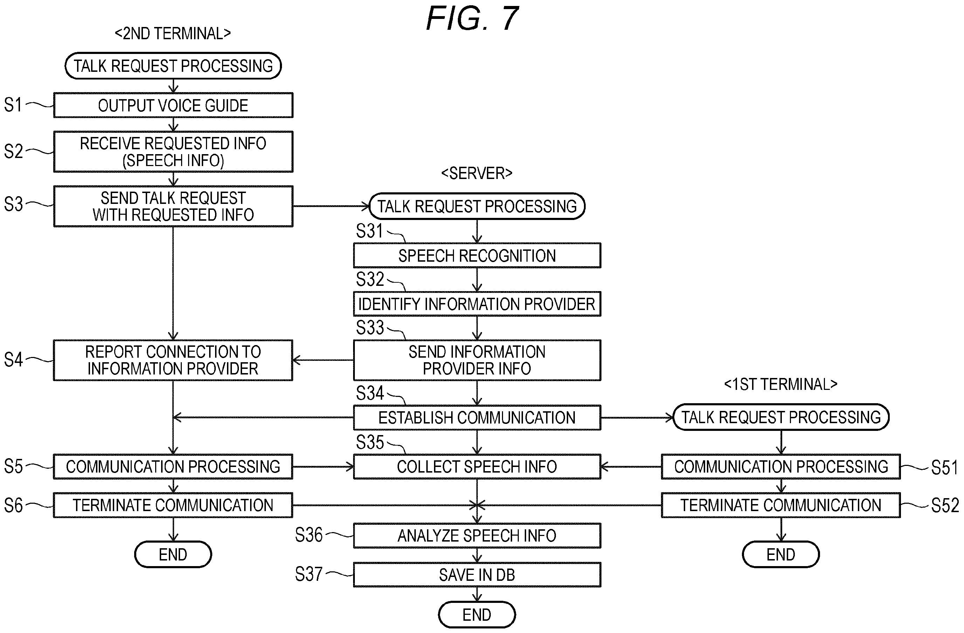

When the second communication terminal 2B displays the request screen and subsequently the information user 7B operates the TALK button B1, the second communication terminal 2B initiates a talk request processing illustrated in Fig. 7. First, the second communication terminal 2B controls the audio output device 24 to output a voice guide "what do you want to know?" (step S1), and then receives an audio input (step S2).

In step S2, the second communication terminal 2B receives information requested by the information user 7B from the audio input device 23. Thereafter, the second communication terminal 2B functions as a third transmitter and transmits the talk request to the server 4 with the requested information received through the audio input being attached to the talk request (step S3). Upon receipt of the talk request with the requested information being attached, the server 4 initiates a talk request processing. First, the server 4 performs a speech recognition processing to recognize the requested information (step S31). Thereafter, the server 4 functions as a selector configured to select, in accordance with the recognized requested information, a person from a set of information providers 7A stored in the DB 4 and accepting talks (step S32).

In step S31, the server 4 converts speech information of the requested information into text information using a speech recognition technology. The server 4 performs morphological analysis, decomposes a sentence into words, extracts words remaining words except for postpositional words, adverbials, and the like, and recognizes the requested information by comparing the converted text information with text information registered in a text dictionary. For example, when the information user 7B speaks "I want someone near Susono IC to confirm congestion information", the server 4 extracts the words "Susono IC", "congestion information", and "check" and recognizes that the information user wants to check the congestion information of the Susono IC. Subsequently, in step S32, the server 4 identifies the information provider 7A traveling near Susono IC.

Thereafter, the server 4 transmits information regarding the extracted information provider 7A to the second communication terminal 2B (step S33). When information regarding the information provider 7A is received, the second communication terminal 2B reports connection to the information provider 7A (step S4). In the embodiment, the second communication terminal 2B displays "A (nickname) is online. Connecting ..." on the display 27 for example, as illustrated in Fig. 4.

Thereafter, the server 4 functions as a communicating device configured to access the first communication terminal 2A owned by the selected information provider 7A and the second communication terminal 2B owned by the information user 7B and to establish speech communication (step S34). In response to this, the first communication terminal 2A and the second communication terminal 2B are allowed to communicate directly with each other, and thus the first communication terminal 2A and the second communication terminal 2B each initiates speech communication processings (steps S5 and S51).

Thus, the information provider 7A and the information user 7B starts talking. In the speech communication processings at steps S5 and S51, the first communication terminal 2A and the second communication terminal 2B transmit speech information obtained from the audio input devices 23 of the first communication terminal 2A and the second communication terminal 2B to the server 4. The server 4 collects the speech information transmitted from the first communication terminal 2Aand the second communication terminal 2B (step S35).

Thereafter, when the information provider 7A and the information user 7B operate the first communication terminal 1A and the second communication terminal 2B to end the talk, the first communication terminal 2A and the second communication terminal 2B transmit the end of the talk to the server 4 (step S6 and S52), and subsequently ends the talk request processing.

When the server 4 receives the end of the talk from the first communication terminal 2A and the second communication terminal 2B, the server 4 analyzes the collected speech information (step S36). In step S36, the server 4 functions as a converter configured to convert the speech information into the text information using a known speech recognition technology and performs morphological analysis as in step S31 to extract words. The server 4 functions as a classifier configured to classify to which classification the extracted words belong among pre-decided classifications such as congestion information, accident information, weather information, recommended stop-by location information, and shortcut information.

For example, assuming that a conversion includes the information user 7B asking "How is the congestion now?" and the information provider 7A answering "Truck rollover accident. Took 2 hours from Oimatsuda to Susono. Recommend taking a break at Ashigara SA."

In the embodiment, the server 4 extracts "congestion", "truck", "rollover accident", "Oimatsuda", "Susono", "2 hours", "Ashigara SA", "taking a break", as words. The server 4 classifies these words into accident information and congestion information in an area corresponding to Oimatsuda and Susono.

Subsequently, the server 4 classifies the text information (words) obtained by analyzing the speech information, attaches the IDs of the information providers 7A, stores the IDs in the DB 42 (step S37), and then ends the process.

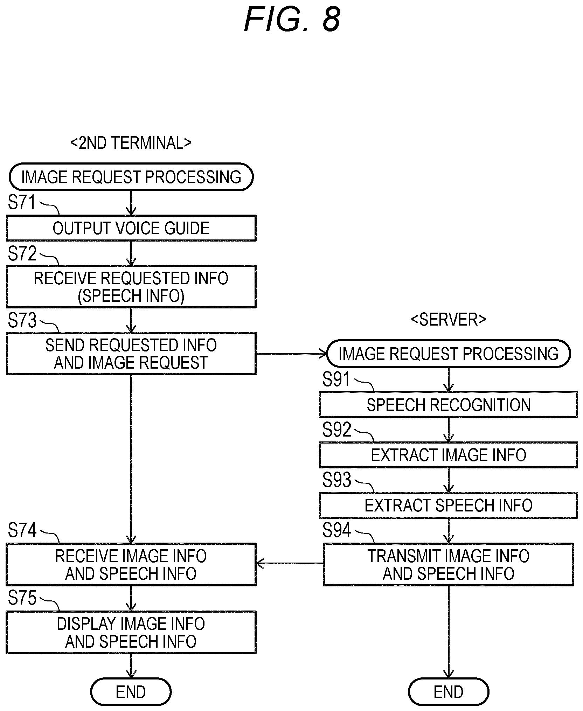

On the other hand, when after the request screen is displayed and subsequently the information user 7B operates the PHOTO button B2, the second communication terminal 2B initiates an image request processing illustrated in Fig. 8. First, the communication terminal 2 controls the audio output device 24 to output a voice guide "what do you want to know" (step S71), and then receives an audio input (step S72).

In step S72, the second communication terminal 2B receives the information requested by the information user 7B from the audio input device 23. Thereafter, the second communication terminal 2B transmits the received requested information and image request to the server 4 (step S73). Upon receipt of the requested information and the image request, the server 4 initiates an image request processing. First, the server 4 performs a speech recognition processing like in step S31 to recognize the requested information (step S91). Thereafter, the server 4 extracts, in accordance with the recognized requested information, image information (still image) from the image information (moving image) stored in the DB 4 (step S92). The server 4 extracts text information (words) classified in accordance with the recognized requested information from the set of text information (words) obtained by converting the speech information and stored in the DB 4 (step S93).

For example, when the information provider 7A speaks "I want to check Susuno accident situation with photo", the server 4 extracts the words "Susono", "accident", "situation", "and "check" and recognizes that the information provider wants to check a situation of the accident in Susono in step S91. Subsequently, in step S92, the server 4 extracts the image information (still image) captured near a spot at which the Susono accident has occurred from the moving image transmitted to the DB 4. In step S93, the server 4 extracts text information classified into accident information near Susono from the set of text information (words) converted from the speech information and stored in the DB 4.

At this time, when a plurality of pieces of text information (words) of similar classification are stored, the server 4 functions as a reliability calculator configured to compare the text information (words) of the same classification and to calculate reliability of each piece of text information. The reliability is calculated, for example, such that the reliability increases as the number of pieces of matched text information increases. Then, the server 4 extracts only text information (words) with the highest reliability.

Here, it is considered that the extracted text information (words) are "congestion", "truck", "rollover accident", "Oimatsuda", "Susono", "2 hours", "Ashigara SA", "taking a break" The server 4 extracts the words, "truck" and "rollover accident", classified as words related to an accident cause from these words.

Thereafter, the server 4 functions as a second transmitter and transmits text information (in the foregoing example, "truck rollover accident") configured from the extracted image information (still image) and words extracted in step S92 (step S94), and then ends the process.

On the other hand, when text information of the speech information and the image information (still image) are received (step S74), the second communication terminal 2B displays the image information and the text information on the display 27 (step S75) as illustrated in Fig. 2, and then ends the process.

According to the embodiment described above, the speech information of the information provider 7A is converted into text information and the text information stored. Thus, information can be collected also from the speech information and useful information can be acquired from the information provider 7A.

According to the embodiment described above, words are extracted from the text information and stored in the DB 42 so that size of stored information is small.

According to the embodiment described above, the server 4 connects the second communication terminal 2B of the information user 7B requesting a talk and the first communication terminal 2A of the information provider 7A selected in accordance with the request information attached to the talk request to allow speech communication between the second communication terminal 2B and the first communication terminal 2A. The first and second communication terminals 2A, 2B transmit speech information input during the speech communication. The speech information acquired through the communication between the information user 7B who requested the talk and the selected information provider 7A can be transmitted to a second communication terminal 2B owned by another information user 7B.

According to the embodiment described above, the server 4 transmits the text information having the highest reliability among the set of text information.

The present invention is not limited to the embodiment described above, and various changes and modifications may be made therein as appropriate. Material, shape, size, number, number of locations to be arranged, and the like of each element in the embodiment described above is non-limiting and optional in so far as the present invention is achieved.

According to the embodiment described above, image information from the onboard camera 3 and text information obtained from the speech information are transmitted to the information user 7B, but the invention is not limited thereto. For example, only the text information obtained from the speech information may be transmitted to the information user 7B.

According to the embodiment described above, the information provider 7A is selected in accordance with the talk request from the information user 7B and the speech information from the selected information provider 7A is transmitted to the server 4, but the invention is not limited thereto. For example, speech information of a communication of the information provider 7A at a different timing may be transmitted to the server 4.

According to an aspect of the embodiment described above, an information collection system (1) is configured to collect information from an information provider (7A). The information collection system (1) includes a first communication terminal (2A) owned by an information provider (7A) and a server (4) configured to perform communication with the first communication terminal (2A). The first communication terminal (2A) includes an input interface (23) to which speech information is input, and a first transmitter (28) configured to transmit the speech information input through the input interface. The server includes a converter (43) configured to execute a speech recognition to convert the speech information transmitted from the first transmitter into text information, and a storage device (42) configured to store the text information.

The converter (43) may be configured to extract a word from the text information, and the storage device (42) may be configured to store the extracted word.

The information collection system may further include a second communication terminal (2B) to be owned by an information user. The server (4) may further include a second transmitter (43) configured to transmit the text information stored in the storage device (42) to the second communication terminal (2B).

The second communication terminal (2B) may include a third transmitter (28) configured to transmit a talk request to which request information is attached, the request information being indicative of a content of information the information user (7B) desires to acquire. The server (4) may further include a selector (43) configured to select, in accordance with the request information transmitted from the second communication terminal (2B), the information provider (7A) from a set of information providers, and a communicating device (43) configured to connect the second communication terminal (2B) and the first communication terminal (2A) to allow speech communication between the second communication terminal (2B) and the first communication terminal (2A). The first transmitter (28) may be configured to transmit, upon the connection through the communicating device (43), the speech information input through the input interface (23).

The server (4) may further include a classifier (43) configure to classify the text information, and a reliability calculator (43) configured to compare the text information with another text information of a same classification to calculate reliability of each piece of text information. The second transmitter (43) may be configured to transmit the text information having a highest reliability.

According to another aspect of the embodiments described above, a server (4) is configured to perform communication with a first communication terminal (2A) to be owned by an information provider (7A) to collect information from the information provider (7A). The server (4) includes a converter (43) configured to execute a speech recognition to convert speech information transmitted from the first transmitter into text information, and a storage device (42) configured to store the text information converted by the converter.

## Claims

1. An information collection system configured to collect information from an information provider, the information collection system comprising:
a first communication terminal to be owned by the information provider; and
a server configured to perform communication with the first communication terminal,
wherein the first communication terminal comprises:
an input interface to which speech information is input; and
a first transmitter configured to transmit the speech information input through the input interface, and
wherein the server comprises:
a converter configured to execute a speech recognition to convert the speech information transmitted from the first transmitter into text information; and
a storage device configured to store the text information.

2. The information collection system according to claim 1, wherein the converter is configured to extract a word from the text information, and
wherein the storage device is configured to store the extracted word.

3. The information collection system according to claim 1 or 2, further comprising a second communication terminal to be owned by an information user, and
wherein the server further comprises a second transmitter configured to transmit the text information stored in the storage device to the second communication terminal.

4. The information collection system according to claim 3, wherein the second communication terminal comprises a third transmitter configured to transmit a talk request to which request information is attached, the request information being indicative of a content of information the information user desires to acquire,
wherein the server further comprises:
a selector configured to select, in accordance with the request information transmitted from the second communication terminal, the information provider from a set of information providers; and
a communicating device configured to connect the second communication terminal and the first communication terminal to allow speech communication between the second communication terminal and the first communication terminal, and
wherein the first transmitter is configured to transmit, upon the connection through the communicating device, the speech information input through the input interface.

5. The information collection system according to claim 3 or 4, wherein the server further comprises:
a classifier configure to classify the text information; and
a reliability calculator configured to compare the text information with another text information of a same classification to calculate reliability of each piece of text information,
wherein the second transmitter is configured to transmit the text information having a highest reliability.

6. A server configured to perform communication with a first communication terminal to be owned by an information provider to collect information from the information provider, the server comprising:
a converter configured to execute a speech recognition to convert speech information transmitted from the first transmitter into text information; and
a storage device configured to store the text information converted by the converter.
